# EUROPÄISCHE PATENTSCHRIFT

(11) **EP 3 516 121 B1**
(45) Veröffentlichungstag und Bekanntmachung des Hinweises auf die Patenterteilung: **25.01.2023**
(21) Anmeldenummer: 17777643.2
(22) Anmeldetag: 15.09.2017
(51) Int. Cl.: E02D 27/42

(54) **FUNDAMENT FÜR EINE WINDMÜHLE**
FOUNDATION FOR A WIND TURBINE
EMBASE D'ÉOLIENNE

(30) Priorität: 26.09.2016 AT 4402016
(43) Veröffentlichungstag der Anmeldung: 31.07.2019
(73) Patentinhaber: Holcim Technology Ltd, 8645 Jona (CH)
(72) Erfinder: SCHULDT, Christian, 5113 Holderbank (CH); STECHER, Arne, 5113 Holderbank (CH)
(74) Vertreter: Keschmann, Marc
(86) Internationale Anmeldenummer: PCT/IB2017/001123
(87) Internationale Veröffentlichungsnummer: WO 2018/055444

(56) Entgegenhaltungen:
- WO-A1-2015/185770
- WO-A2-2004/101898
- US-A1- 2011 061 321
- US-A1- 2015 052 841

## Beschreibung

Die Erfindung betrifft ein Fundament für eine Windmühle mit einem kreisförmigen oder polygonalen Standfuß zum Tragen eines Windmühlenturms und mehreren Rippen, die vom Standfuß radial nach außen vorstehen.

Ferner betrifft die Erfindung eine Windturbine mit einem einen Rotor umfassenden Windmühlenturm, wobei der Windmühlenturm auf einem Fundament montiert ist.

Die DE 103 21 647 A1 beschreibt ein Fundament für eine Windmühle mit einem kreisförmigen oder polygonalen Standfuß zum Tragen eines Windmühlenturms und mehreren Rippen, die vom Standfuß radial nach außen vorstehen. WO2015/185770A1 und US2015/0052841A1 offenbaren ebenfalls Fundamente für Windmühlen.

Ein Windmühlenfundament der eingangs genannten Art ist auch in der WO 2004/101898 A2 offenbart. Wie dort beschrieben ist, ist für die Herstellung des Fundaments von Onshore-Windkraftanlagen ein hoher manueller und administrativer Aufwand erforderlich, und die Herstellung ist sehr zeitaufwendig. Angesichts der zunehmenden Abmessungen moderner Windturbinen ist das Fundament sehr hohen Lasten ausgesetzt und muss entsprechend dimensioniert werden. Heutige Windturbinen haben einen Turm mit einer Höhe von bis zu 150 m und erzeugen bis zu 6 MW. In der Mehrzahl der Fälle besteht der Turm oder Mast von Windturbinen aus verstärktem Beton und wird unter Verwendung vorgefertigter Betonelemente gebaut. Alternativ kann der Windmühlenturm auch von einer Stahlkonstruktion gebildet sein.

Bisher wurden die Fundamente für Windkraftanlagen im Wesentlichen durch Ausgraben einer Baugrube, Einbringen einer körnigen Unterstruktur, Errichten einer Fundamentkomponente, Ausführen der notwendigen Einschalungs- und Verstärkungsarbeiten und anschließendes Füllen der Baugrube mit Ortbeton hergestellt, wobei der Beton als Transportbeton durch Fertigmischlaster zur Arbeitsstelle transportiert und in die Baugrube gegossen wurde. Die zentrale Fundamentkomponente weist gewöhnlich eine hohlzylindrische Konfiguration auf und wird im Allgemeinen vorgefertigt und als Einheit zur jeweiligen Montagestelle transportiert.

Die Herstellung eines Windmühlenfundaments durch Ortbeton ist mit einer Mehrzahl von Nachteilen verbunden. Sie erfordert eine komplexe Logistik für die Planung der Herstellungsaktivitäten an der Baustelle und sie ist im Hinblick auf die Errichtung der Einschalung und der Verstärkungsstruktur sowie auf das Transportieren und Gießen des Betons mit zeitaufwendigen und kostspieligen Vorgängen an der Baustelle verbunden. Dies gilt insbesondere angesichts dessen, dass bis zu 1000 m³ Beton für große Fundamente erforderlich sein können.

Um den Bauprozess eines Fundaments zu verbessern, wurde bereits in WO 2004/101898 A2 vorgeschlagen, das Fundament unter Verwendung vorgefertigter Betonelemente zu bauen. Solche Betonelemente werden in einer Vorfertigungsanlage hergestellt und zur Arbeitsstelle transportiert, wo sie durch die Verwendung eines Krans in Position gebracht und dann miteinander verbunden werden. Auf diese Weise kann die Dauer der Bauvorgänge an der Arbeitsstelle erheblich verringert werden. Die vorgefertigten Betonelemente bilden, wenn sie miteinander verbunden sind, ein Fundament mit einem zentralen Standfuß und mehreren Rippen, die jeweils vom Standfuß radial nach außen vorstehen. Jedes vorgefertigte Betonelement bildet eine der Rippen und einen zugeordneten Umfangsabschnitt des Standfußes. Die Umfangsabschnitte des Standfußes werden durch verschraubte Flansche miteinander verbunden. Wie in WO 2004/101898 A2 beschrieben ist, können die vorgefertigten Betonelemente stahlverstärkt sein. Nachdem das Fundament gebildet wurde, wird der Turm oder Mast der Windmühle auf dem Standfuß errichtet und durch die Verwendung von Ankerbolzen am Standfuß befestigt.

Durch die Verwendung vorgefertigter Betonelemente können die Elemente in einer kontrollierten Umgebung hergestellt werden, sodass die Qualität des gehärteten Betons verbessert werden kann. Von einem finanziellen Gesichtspunkt betrachtet können die in einer Vorfertigungsanlage verwendeten Formen viele Male wiederverwendet werden, bevor sie ersetzt werden müssen, sodass die Kosten für die Form bzw. die Einschalung pro Einheit niedriger sind als bei einer Herstellung mit Ortbeton, die jedes Mal eine eigens errichtete Schalung erfordert. Die Schalung kann zwar mehrfach verwendet werden, muss aber von Ort zu Ort transportiert und entsprechend gereinigt werden.

Windturbinen sind Lasten und Beanspruchungen spezifischer Natur ausgesetzt, die vom Fundament aufgenommen werden müssen. Der Wind selbst wirkt in einer nicht vorhersehbaren und veränderlichen Weise. Andererseits wirken mit immer größeren Anlagen dynamische Lastkomponenten infolge von Vibrationen und Resonanzen auf die Struktur. Ferner übertragen Türme mit einer Höhe von 100 Metern und mehr infolge des auftretenden Kippmoments erhebliche exzentrische Lasten auf das Fundament. Der Beton des Fundaments muss dabei einer Kompression widerstehen, die in der komprimierten Zone auftritt, und die Verstärkungsstruktur des Betons muss die Dehnungskräfte im entgegengesetzten Teil des Fundaments aufnehmen, weil der Beton selbst eine verhältnismäßig geringe Dehnungsfestigkeit aufweist. Fundamente aus vorgefertigten verstärkten Betonelementen haben den Vorteil, dass die Leistungsfähigkeit und die Qualität des Betons, wie auch die Qualität der Herstellung insbesondere des Nachbereitungs- und Aushärteprozesses höher sind, so dass ein geringeres Risiko einer Rissbildung und eine höhere Widerstandsfähigkeit gegenüber dynamischen und statischen Lasten gegeben sind.

Generell ist es wünschenswert den Turm bzw. Mast der Windmühle direkt auf dem Fundament zu montieren. Die Befestigung des Turms am Fundament ist jedoch nicht standardisiert, sondern muss an die spezifischen Gegebenheiten der jeweiligen Windmühlenkonstruktion angepasst werden. So variieren Windmühlen in den Abmessungen und in der Formgebung des Turms, im Material des Turms (Stahl oder Beton) und in der Art der vorgesehenen Befestigung (z.B. Ankerbolzen oder Seilverspannung). Es ist daher erforderlich, das Fundament an diese Gegebenheiten anzupassen, was im Falle von Betonfertigteilfundamenten jedoch insofern nachteilig ist, als keine standardisierte Serienfertigung solcher Fundamente möglich ist.

Ein weiterer Nachteil von aus Betonfertigteilen zusammengesetzten Fundamenten besteht darin, dass die Betonelemente vom Werk zum Aufstellungsort der Windmühle transportiert werden müssen. Aus dem generellen Bestreben, die Anzahl der Betonfertigteile, aus denen das Fundament besteht, zu minimieren, resultieren große und sperrige Betonelemente, deren Transport eine besondere Herausforderung darstellt. Um den Transport mit allgemein verfügbaren Straßentransportfahrzeugen zu ermöglichen, sind jedoch maximale Transportabmessungen einzuhalten, welche der zu transportierende Bauteil nicht überschreiten darf.

Die vorliegende Erfindung zielt daher darauf ab, ein verbessertes Fundament für eine Windmühle bereitzustellen, das aus vorgefertigten Betonelementen besteht, die soweit wie möglich in Serienfertigung für ein möglichst breites Anwendungsgebiet hergestellt werden können, wobei gleichzeitig eine Anpassung an die spezifischen Gegebenheiten der jeweiligen Turmkonstruktion in einfacher Weise ermöglicht werden soll.

Zum Lösen dieser Aufgabe sieht die Erfindung ein Fundament gemäß der beigefügten Ansprüche 1-19 vor.

Dadurch, dass der Standfuß in Höhenrichtung in einen unteren Basisringabschnitt und einen oberen Adapterringabschnitt unterteilt ist, die jeweils aus vorgefertigten Betonelementen zusammengesetzt sind, können die Betonelemente des Basisringabschnitts immer gleich ausgebildet werden ohne dass auf herstellerspezifische Anpassungen für den Turmbereich eingegangen werden muss. Dadurch wird eine Serienfertigung der den Basisringabschnitt bildenden Betonelemente ermöglicht. Die baulichen Anpassungen an den Turmbereich stellt erfindungsgemäß der Adapterringabschnitt zur Verfügung. Der Adapterringabschnitt stellt die kraftoptimale Verbindung zwischen dem Fertigteilfundament, nämlich dem Basisringabschnitt, und dem Windkraftturm her und führt somit zu einer verbesserten Standardisierung des Fertigteilfundaments.

Die Ausbildung des Adapterringabschnitts kann zusätzlich zu den durch den Turm bedingten baulichen Anpassungen gewünschtenfalls weitere Funktionen berücksichtigen. Beispielsweise, aber nicht zur beanspruchten Erfindung gehörend, kann der Adapterringabschnitt einen Einstieg, wie z.B. eine Türöffnung, in den Turm aufweisen. Weiters kann der Adapterringabschnitt zur Aufnahme von Netzverbindungskabeln und/oder einer Einspeisungsanlage mit vorgefertigten Befestigungspunkten versehen sein oder eine vorgefertigte Aufnahme für Elektroinstallationen aufweisen. Weiters kann der Adapterringabschnitt im Inneren des vom Adapterringabschnitt begrenzten Raums angeordnete Treppen oder bauliche Vorbereitungen für Aufzüge aufweisen.

Die Erfindung stellt weiters ein Verfahren zur Herstellung eines Windmühlenfundaments gemäß dem Anspruch 20 dar.

Ein weiterer Vorteil der erfindungsgemäßen Ausbildung ergibt sich dadurch, dass die höhenmäßige Aufteilung des Fundaments in einen Basisringabschnitt und einen Adapterringabschnitt zu einer Reduzierung der Bauteilhöhe der vorgefertigten Betonelemente führt, sodass die Einhaltung einer vorgegebenen maximalen Transporthöhe von z.B. 4,0 m ermöglicht wird.

Erfindungsgemäß ist der Basisringabschnitt in mehrere Umfangsabschnitte unterteilt, wobei ein Umfangsabschnitt des Basisringabschnitts und eine vom Umfangsabschnitt nach außen vorstehende Rippe jeweils als ein vorgefertigtes Betonelement integral miteinander ausgebildet sind. Die vorgefertigten Betonelemente weisen hierbei bevorzugt jeweils einen ringsegmentartigen inneren Abschnitt auf, wobei die ringsegmentartigen inneren Abschnitte aller den Basisringabschnitt ausbildenden Betonelemente in ihrer aneinander gestellten Position eine geschlossene ringförmige Struktur ausbilden, die einen inneren Hohlraum des Fundaments umschließt. Die vorgefertigten Betonelemente weisen weiters bevorzugt jeweils einen radial äußeren Abschnitt auf, welcher die genannte Rippe ausbildet. Die Rippen der einzelnen Betonelemente sind im zusammengestellten bzw. zusammengebauten Zustand des Fundaments bevorzugt in Abstand voneinander angeordnet.

Bei einer nicht erfindungsgemäßen alternativen Ausbildung ist vorgesehen, dass ein Umfangsabschnitt des Basisringabschnitts und eine vom Umfangsabschnitt nach außen vorstehende Rippe aus wenigstens zwei in radialer Richtung aneinander anschließenden, vorgefertigten Betonelementen gebildet sind. Dies ermöglicht eine Aufteilung der aus dem Umfangsabschnitt des Basisringabschnitts und der zugehörigen Rippe bestehenden Struktur in wenigstens zwei radial aneinander anschließende Abschnitte, die jeweils von einem vorgefertigten Betonelement gebildet sind. Die Aufteilung kann grundsätzlich beliebig erfolgen. Beispielsweise kann der Umfangsabschnitt des Basisringabschnitts von einem eigenen vorgefertigten Betonelement und die Rippe von einem eigenen vorgefertigten Betonelement gebildet sein. Die Rippe selbst kann aus wenigstens zwei vorgefertigten radial aneinander anschließenden Betonelementen zusammengesetzt sein. Ebenso denkbar ist eine Ausbildung, bei welcher der Umfangsabschnitt des Basisringabschnitts und ein innerer radialer Teilabschnitt der Rippe zusammen von einem einzigen vorgefertigten Betonelement gebildet sind und dass wenigstens ein äußerer radialer Teilabschnitt der Rippe von wenigstens einem weiteren vorgefertigten Betonelement gebildet ist.

Gemäß einer bevorzugten Ausbildung ist der Adapterringabschnitt in wenigstens zwei Umfangsabschnitte unterteilt, wobei jeder Umfangsabschnitt von einem vorgefertigten Betonelement gebildet ist. Dabei sind die vorgefertigten Betonelemente des Adapterringabschnitts im zusammengebauten Zustand des Fundaments auf die vorgefertigten Betonelemente des Basisringabschnitts gestellt.

Bevorzugt weisen der Adapterringabschnitt und der Basisringabschnitt eine voneinander verschiedene Umfangsteilung auf. Die Teilungsebenen der umfangsmäßigen Teilung des Adapterringabschnitts verlaufen hierbei bevorzugt vertikal. Die Teilungsebenen der umfangsmäßigen Teilung des Adapterringabschnitts sind zu den Teilungsebenen der umfangsmäßigen Teilung des Basisringabschnitts bevorzugt versetzt angeordnet. Bevorzugt weisen die Umfangsabschnitte des Adapterringabschnitts untereinander dieselbe umfangsmäßige Erstreckung auf. Auch die Umfangsabschnitte des Basisringabschnitts können untereinander dieselbe umfangsmäßige Erstreckung aufweisen. Wenn der Adapterringabschnitt und der Basisringabschnitt eine voneinander verschiedene Umfangsteilung aufweisen sollen, kann dies beispielsweise dadurch verwirklicht werden, dass sich die umfangsmäßige Erstreckung der Umfangsabschnitte des Adapterringabschnitts von der umfangsmäßigen Erstreckung der Umfangsabschnitte des Basisringabschnitts unterscheidet. Vorzugsweise weist der Adapterringabschnitt eine Umfangsteilung von 180° auf.

Eine Reduzierung der Bauteilhöhe der vorgefertigten Betonelemente und damit eine Vereinfachung des Transports wird gemäß einer bevorzugten Weiterbildung dadurch erreicht, dass der Adapterringabschnitt wenigstens zwei übereinander angeordnete Ringe aus vorgefertigten Betonelementen aufweist. Dabei können die Ringe jeweils in wenigstens zwei Umfangsabschnitte unterteilt sein und jeder Umfangsabschnitt kann von einem vorgefertigten Betonelement gebildet sein, wobei die Umfangsteilung vorzugsweise zueinander versetzt, insbesondere um 90° versetzt, angeordnet ist. Dadurch wird eine das Fundament ggf. schwächende, durchgehende Teilungsebene vermieden.

Wie bereits erwähnt ist der Adapterringabschnitt im zusammengebauten Zustand des Fundaments auf dem Basisringabschnitt aufgelegt. Die Unterteilung des Standfußes in einen Basisring- und einen Adapterringabschnitt verläuft hierbei bevorzugt entlang wenigstens einer eine horizontale Ebene umfassenden Teilungsfläche.

Die Teilungsfläche kann bevorzugt auch wenigsten eine Stufe ausbilden, sodass sich entlang einer bevorzugt zylindrischen Fläche in radialer Richtung ein Formschluss zwischen dem Adapterring- und dem Basisringabschnitt ergibt. Der Adapterringabschnitt passt sich dadurch in das Fertigteilfundament im inneren Kreis so an, sodass sich gleichsam ein zusammenhängendes Bauwerk ausbildet.

Um den Kraftfluss vom Adapterringabschnitt in die sich meist nach außen hin in Höhenrichtung verjüngenden Rippen zu begünstigen, sieht eine weitere bevorzugte Ausführungsform vor, dass ein Außenrandabschnitt der Teilungsfläche von einer schräg nach oben und außen verlaufenden Kreisringfläche gebildet wird.

Bevorzugt sind Verbindungselemente, wie z.B. Schraubverbindungen, zur vorzugsweise lösbaren Verbindung des Adapterringabschnitts mit dem Basisringabschnitt vorgesehen. Der Adapterringabschnitt wird mit Hilfe der genannten Verbindungselemente vorzugsweise von oben her mit dem Basisringabschnitt verbunden. Die Verbindungsmittel werden z.B. von Schraubbolzen gebildet, die in vorzugsweise vertikal verlaufende Schraublöcher geschraubt werden. Alternativ können die Schraubbolzen so angeordnet sein, dass sie Durchgangsbohrungen sowohl des Basisringabschnitts als auch des Adapterringabschnitts durchsetzen und die genannten Abschnitte durch Anbringen von Schraubenmuttern an den entgegengesetzten Enden zusammenspannen.

Eine weitere bevorzugte Ausbildung der Erfindung sieht vor, dass der Adapterringabschnitt eine horizontale Standfläche für den Windmühlenturm sowie Verankerungsmittel zum Verankern des Windmühlenturms am Standfuß umfasst, wobei die Verankerungsmittel vorzugsweise Ankerbolzen und/oder Seildurchführungen umfassen. Die Ankerbolzen sind in der Regel zum Befestigen eines als Stahlkonstruktion ausgebildeten Turms vorgesehen. Die Seildurchführungen sind in der Regel für die Befestigung von Betontürmen vorgesehen.

Die Verbindungselemente für die Verbindung des Adapterringabschnitts mit dem Basisringabschnitt sind bevorzugt radial außerhalb der Verankerungsmittel für die Verankerung des Windmühlenturms am Standfuß angeordnet. Alternativ können die für das Verbinden des Adapterringabschnitts mit dem Basisringabschnitt vorgesehenen Verbindungselemente, insbesondere Schraubbolzen, für die Verankerung des Windmühlenturms am Standfuß mitverwendet werden. Eine bevorzugte Ausbildung sieht zu diesem Zweck vor, dass die Verbindungselemente für die Verbindung des Adapterringabschnitts mit dem Basisringabschnitt von den Verankerungsmitteln für die Verankerung des Windmühlenturms am Standfuß gebildet sind.

Die vorgefertigten Betonelemente, welche den Standfuß, einschließlich des Adapterringabschnitts und des Basisringabschnitts, sowie die Rippen ausbilden, bestehen bevorzugt aus verstärktem Beton. Als verstärkter Beton wird hierbei Beton verstanden, der Verstärkungselemente aufweist, wie z.B. eine in den Beton eingebettete Armierung aus Verstärkungsstangen/Stahlbauelemente und/oder Spannelemente zum Zusammenspannen bzw. Vorspannen der Betonelemente im Sinne von Spannbeton.

Im Gegensatz zu Fundamenten aus Ortbeton wird bei Fundamenten aus Betonfertigelementen ohne ergänzende Maßnahmen keine monolithische Struktur bereitgestellt, sodass technische Lösungen für das sichere Verbinden der vorgefertigten Betonelemente miteinander zur Nachahmung einer monolithischen Struktur angestrebt werden. Um zu erreichen, dass sich das erfindungsgemäße Fundament ähnlich wie ein monolithisches Fundament verhält, um hohen statischen und dynamischen Lasten zu widerstehen, sieht eine bevorzugte Ausbildung vor, dass die vorgefertigten Betonelemente des Basisringabschnitts und die vorgefertigten Betonelemente des Adapterringabschnitts aus verstärktem Beton bestehen, der eine erste Verstärkungsstruktur, insbesondere Verstärkungselemente, -stangen oder -drähte, aufweist, welche in die vorgefertigten Betonelemente eingebettet sind und/oder die als Spannelemente zum Zusammenspannen der vorgefertigten Betonelemente ausgebildet sind, und dass eine zweite Verstärkungsstruktur bereitgestellt ist, welche die vorgefertigten Betonelemente zusammenhält und mit der ersten Verstärkungsstruktur gekoppelt ist.

Die zweite Verstärkungsstruktur kann von einer beliebigen Art sein, die dafür geeignet ist, die vorgefertigten Betonelemente starr zusammenzuhalten, um eine monolithische Struktur zu bilden. Die zweite Verstärkungsstruktur unterscheidet sich von der ersten Verstärkungsstruktur und wird daher vorzugsweise nicht in die vorgefertigten Betonelemente eingebettet. Die zweite Verstärkungsstruktur wird hierbei mit der ersten Verstärkungsstruktur gekoppelt, wodurch ein ununterbrochener Lastweg zwischen den Verstärkungsstrukturen ermöglicht wird, so dass die in das Fundament eingebrachten Kräfte wirksam verteilt werden. Im Kontext der Erfindung bedeutet das Koppeln der ersten und der zweiten Verstärkungsstruktur, dass die auf die erste Verstärkungsstruktur einwirkenden Kräfte auf die zweite Verstärkungsstruktur übertragen werden, ohne dass Beton dazwischen angeordnet wird, und umgekehrt. Demgemäß können die erste und die zweite Verstärkungsstruktur direkt oder über ein von Beton verschiedenes starres Verbindungselement miteinander verbunden werden.

Die erste Verstärkungsstruktur weist vorzugsweise Verstärkungsstangen auf, die aus Stahl oder einem ähnlichen starren Material bestehen. Vorzugsweise erstrecken sich die Verstärkungsstangen in Längsrichtung der Rippen. Zusätzliche Verstärkungsstangen können sich senkrecht oder schräg zu den Verstärkungsstangen erstrecken, die sich in Längsrichtung der Rippen erstrecken. Zusätzliche Verstärkungsstangen/-profile können auch im Standfuß angeordnet werden und sich in axialer Richtung davon erstrecken. Die länglichen Verstärkungsstangen können sich vorzugsweise in radialer Richtung zum Zentrum des Fundaments erstrecken, wobei die länglichen Verstärkungsstangen entweder in einer horizontalen Ebene angeordnet werden können oder sich schräg zur horizontalen Ebene, insbesondere zum Standfuß aufsteigend, erstrecken können. Im letztgenannten Fall werden die Verstärkungsstangen in Bezug auf die Kräfte, die vom Standfuß radial nach außen abgeleitet werden, im Wesentlichen mit dem Lastweg ausgerichtet.

Die zweite Verstärkungsstruktur weist vorzugsweise mehrere starre längliche Verstärkungselemente, insbesondere Stahlprofile oder -stangen, auf, welche jeweils die vorgefertigten Betonelemente eines Paars entgegengesetzt angeordneter vorgefertigter Betonelemente derart miteinander verbinden, dass sie einen vom Standfuß eingekreisten Hohlraum durchqueren. Die länglichen Verstärkungselemente der zweiten Verstärkungsstruktur werden mit der ersten Verstärkungsstruktur, insbesondere mit den Verstärkungsstangen, vorzugsweise mit den Verstärkungsstangen, die sich in Längsrichtung der Rippen erstrecken, gekoppelt. Auf diese Weise werden die in entgegengesetzt angeordnete vorgefertigte Betonelemente eingebetteten Verstärkungsstangen durch die länglichen Verstärkungselemente der zweiten Verstärkungsstruktur miteinander verbunden, wobei ein Lastübertragungsweg zwischen der ersten Verstärkungsstruktur der entgegengesetzt angeordneten vorgefertigten Betonelemente gebildet wird. Dies führt dazu, dass die Dehnungslast, die infolge eines Biegemoments des Turms auf das Fundament ausgeübt wird, nicht nur von der ersten Verstärkungsstruktur aufgenommen wird, die auf einer Seite des Fundaments angeordnet ist, sondern auch auf die erste Verstärkungsstruktur übertragen wird, die auf der entgegengesetzten Seite des Fundaments angeordnet ist.

Gemäß einer bevorzugten Ausführungsform der Erfindung wird jedes Paar entgegengesetzt angeordneter vorgefertigter Betonelemente mit einem der starren länglichen Verstärkungselemente verbunden. Auf diese Weise durchqueren mehrere längliche Verstärkungselemente, insbesondere Stahlstangen oder -profile, den vom Standfuß eingekreisten Hohlraum. Weil diese durchquerenden länglichen Verstärkungselemente alle diametral angeordnet sind, treffen sie sich im Zentrum des Standfußes, so dass eine symmetrische Anordnung erreicht wird, welche für eine optimale Verteilung der Kräfte innerhalb des gesamten Fundaments sorgt.

Die länglichen Verstärkungselemente können den Standfuß in einer horizontalen Ebene durchqueren. Vorzugsweise ist jedoch vorgesehen, dass ein Paar von entgegengesetzt angeordneten vorgefertigten Betonelementen jeweils ein vorgefertigtes Betonelement des Basisringabschnitts und ein vorgefertigtes Betonelement des Adapterringabschnitts umfasst.

In diesem Zusammenhang ist es vorteilhaft, wenn die starren länglichen Verstärkungselemente an ihrem Schnitt, der auf der Mittelachse des Standfußes angeordnet ist, miteinander verbunden werden. Auf diese Weise wird ein Mittelpunkt in der Symmetrieachse des Fundaments bereitgestellt, der eine Lastverteilung in verschiedenen Richtungen ermöglicht.

In Bezug auf die Kopplung zwischen der ersten Verstärkungsstruktur und der zweiten Verstärkungsstruktur sieht eine bevorzugte Ausführungsform vor, dass die starren länglichen Verstärkungselemente der zweiten Verstärkungsstruktur und der ersten Verstärkungsstruktur, insbesondere die Verstärkungsstangen, durch eine Ummantelung, die an einer Innenfläche des Standfußes angeordnet ist, miteinander verbunden werden. Die Ummantelung kann aus einem Stahlblechgehäuse bestehen, das an der Innenfläche des Standfußes befestigt ist. Im Fall eines Standfußes in Form eines Hohlzylinders kann die Ummantelung als eine zylindrische Ummantelung ausgebildet sein, die an der inneren zylindrischen Fläche des Standfußes angeordnet ist. Die Ummantelung dient dazu, den Lastweg von der ersten Verstärkungsstruktur zur zweiten Verstärkungsstruktur zu richten und umgekehrt. Dies wird durch starres Verbinden sowohl der Verstärkungsstangen/- profile der ersten Verstärkungsstruktur als auch der Verstärkungselemente der zweiten Verstärkungsstruktur mit der Ummantelung erreicht.

In diesem Zusammenhang sieht eine bevorzugte Ausführungsform vor, dass die Verstärkungsstangen der ersten Verstärkungsstruktur durch Schweißen oder Schraubverbindungen an der Ummantelung befestigt werden. Dies kann vorteilhafterweise erreicht werden, indem die Verstärkungsstangen der ersten Verstärkungsstruktur so angeordnet werden, dass sie von den vorgefertigten Betonelementen nach innen vorstehen und vorzugsweise in Öffnungen eindringen, die in der Ummantelung bereitgestellt sind. Das Schweißen kann in diesem Fall an der Innenseite der Ummantelung erfolgen. Alternativ kann das Schweißen an der Außenseite der Ummantelung erfolgen.

Ferner kann die zweite Verstärkungsstruktur durch Schweißen oder eine Schraubverbindung an der Ummantelung befestigt werden.

Alternativ kann die zweite Verstärkungsstruktur durch Schweißen oder eine Schraubverbindung an Anschlussstücke befestigt werden, die in die vorgefertigten Betonelemente integriert, insbesondere eingegossen sind und an die erste Verstärkungsstruktur angekoppelt sind.

Der Hohlraum innerhalb des Standfußes kann für verschiedene Zwecke verwendet werden, beispielsweise als Speicherplatz oder zum Vornehmen von Wartungsarbeiten, und er kann daher mit Treppen, Plattformen usw. versehen werden. Ferner kann der Hohlraum auch für die Installation von Nachspannkabeln, den Zugriff auf sie und ihre Wartung verwendet werden, wobei die Nachspannkabel angeordnet werden, um den Turm der Windmühle zu stabilisieren.

Gemäß einer bevorzugten Ausführungsform weisen die vorgefertigten Betonelemente eine Basisplatte zum Tragen der Rippe auf und sind integral damit ausgebildet. Demgemäß können die vorgefertigten Betonelemente einen Querschnitt in Form eines umgekehrten "T" aufweisen, wobei der horizontale T-Balken durch die Basisplatte gebildet ist und der vertikale T-Balken durch die Rippe gebildet ist. Die Rippe braucht jedoch nicht notwendigerweise streng in Form eines vertikalen Balkens ausgebildet zu sein. Die Rippe kann auch einen Querschnitt aufweisen, der sich zur Spitze hin verengt. Alternativ können die vorgefertigten Betonelemente auch einen Querschnitt in Form eines "I" aufweisen. Eine solche Form wird ausgehend von der oben beschriebenen umgekehrten T-Form durch einen oberen horizontalen Balken erreicht, der zum unteren horizontalen T-Balken vorzugsweise parallel ist.

Ferner kann die Höhe der Rippe vorzugsweise zum Standfuß hin kontinuierlich zunehmen. Eine kontinuierlich zunehmende Höhe der Rippe ermöglicht es, die Querschnittsfläche der Rippe an die Kraftausbreitung anzupassen, und sie kann beispielsweise verwirklicht werden, indem die obere Fläche oder der obere Rand der Rippe als eine Rampe ausgelegt wird, die zum Standfuß hin ansteigt. Alternativ kann die Rippe eine gekrümmte, nämlich konkave Konfiguration der oberen Fläche oder des oberen Rands aufweisen. In jedem Fall kann die Höhe der Rippe zum Standfuß hin zunehmen, um die Höhe des Standfußes an dem Punkt zu erreichen, wo die Rippe in den Standfuß übergeht.

Die in die Rippe eingebetteten Verstärkungsstangen können sich vorzugsweise im Wesentlichen parallel zum oberen Rand der Rippe, insbesondere parallel zur ansteigenden Rampe, erstrecken.

Die Basisplatten der vorgefertigten Betonelemente können eine rechteckige Form aufweisen. Alternativ können sich die Platten in horizontaler Richtung mit zunehmendem Abstand vom Zentrum des Fundaments verbreitern.

Um den Hohlraum innerhalb des Standfußes an seinem Boden zu schließen, sieht eine bevorzugte Ausführungsform der Erfindung vor, dass die Basisplatte einen Randabschnitt aufweist, der nach innen in den vom Standfuß eingekreisten Hohlraum vorsteht. Insbesondere bilden die Randabschnitte aller vorgefertigten Betonelemente gemeinsam einen umfänglichen, insbesondere kreisförmigen Rand, der eine zentrale Bodenplatte, die am Boden des Standfußes angeordnet ist, umfänglich stützt.

Gemäß einer weiteren bevorzugten Ausführungsform der Erfindung werden die vorgefertigten Betonelemente durch wenigstens ein Nachspannkabel, das in einem umfänglichen, insbesondere kreisförmigen Durchgang angeordnet ist, der im Standfuß ausgebildet ist, aneinander festgezogen. Solche Kabel haben die Funktion einer zusätzlichen Verstärkungsstruktur, im Gegensatz zu der erfindungsgemäßen zweiten Verstärkungsstruktur werden die Kabel jedoch nicht mit der in die vorgefertigten Betonelemente eingebetteten ersten Verstärkungsstruktur gekoppelt.

Wenn die vorgefertigten Betonelemente aneinander festgezogen werden, werden die Seitenflächen benachbarter Umfangsabschnitte des Standfußes gegeneinander gedrückt. Zum genauen Ausrichten der benachbarten Umfangsabschnitte miteinander können die Seitenflächen Formpasselemente in der Art einer Zungen- und Rillenanordnung aufweisen, die miteinander zusammenwirken, um die relative Position der Segmente zu gewährleisten.

Die Installation der vorgefertigten Betonelemente an der Arbeitsstelle wird erheblich vereinfacht, wenn gemäß einer bevorzugten Ausführungsform benachbarte vorgefertigte Betonelemente in ihren Abschnitten, die vom Standfuß nach außen vorstehen, in Umfangsrichtung voneinander beabstandet sind. Insbesondere haben die Basisplatten eine solche Breitenabmessung, dass die Basisplatten benachbarter vorgefertigter Betonelemente einander nicht berühren. Auf diese Weise können die Herstellungstoleranzen bei der Herstellung der vorgefertigten Betonelemente erreicht werden.

Der für die Herstellung der vorgefertigten Betonelemente verwendete Beton kann von einem beliebigen Typ sein, der typischerweise auch für das Gießen von Beton an der Verwendungsstelle verwendet wird. Zusätzlich zu Zuschlagstoffen und Wasser enthält Beton Zement als hydraulisches Bindemittel.

Es kann auch faserverstärkter Beton verwendet werden, um die vorgefertigten Betonelemente herzustellen. Die Fasern können aus einem beliebigen Fasermaterial bestehen, das zur Erhöhung der strukturellen Integrität, insbesondere der Stärke, der Stoßfestigkeit und/oder der Haltbarkeit, der sich ergebenden Betonstruktur beiträgt. Faserverstärkter Beton enthält kurze diskrete Verstärkungsfasern, die gleichmäßig verteilt und zufällig orientiert sind.

Vorzugsweise sind die Verstärkungsfasern Kohlefasern, synthetische Fasern und insbesondere Polypropylenfasern. Alternativ können die Verstärkungsfasern Stahlfasern, Glasfasern oder Naturfasern sein.

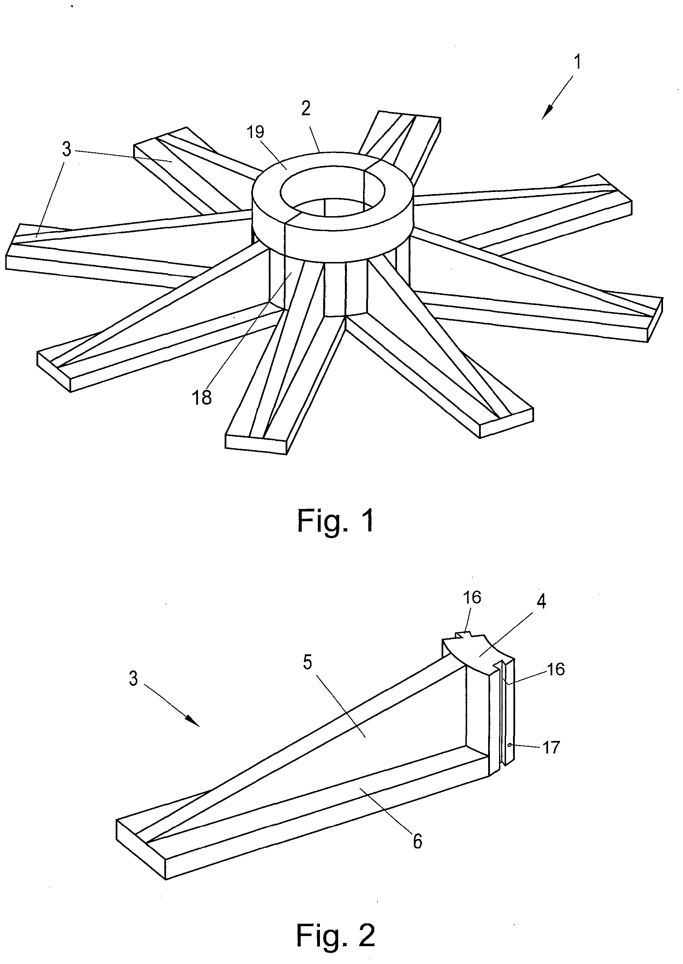

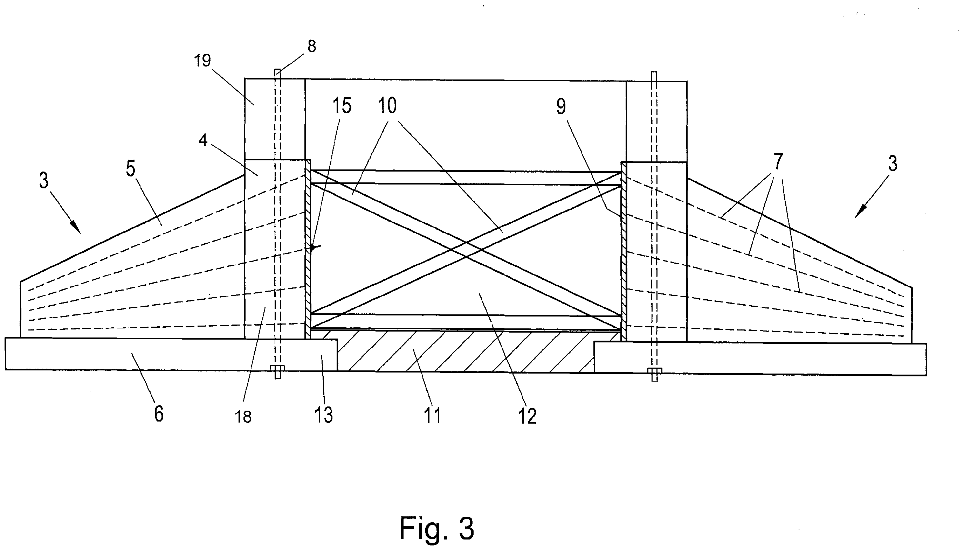

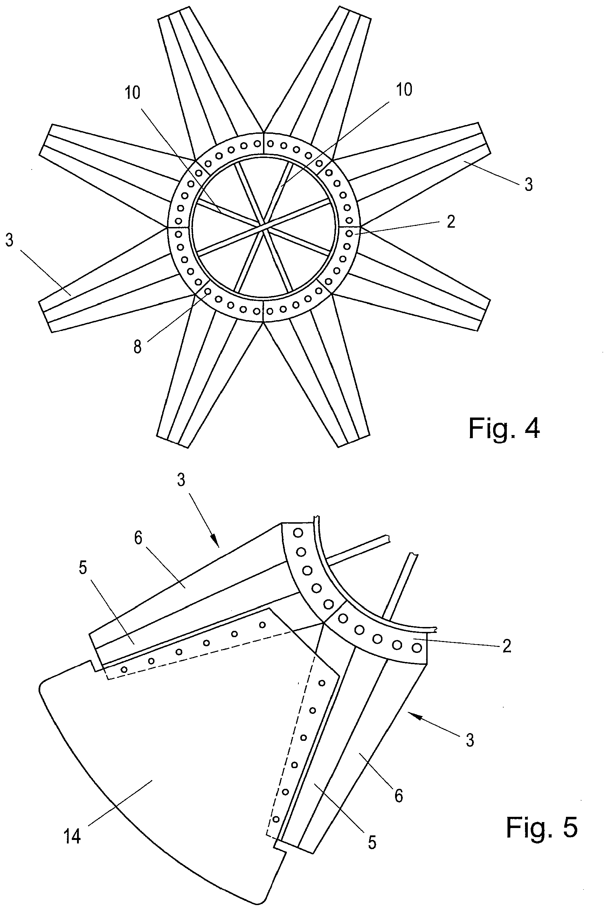

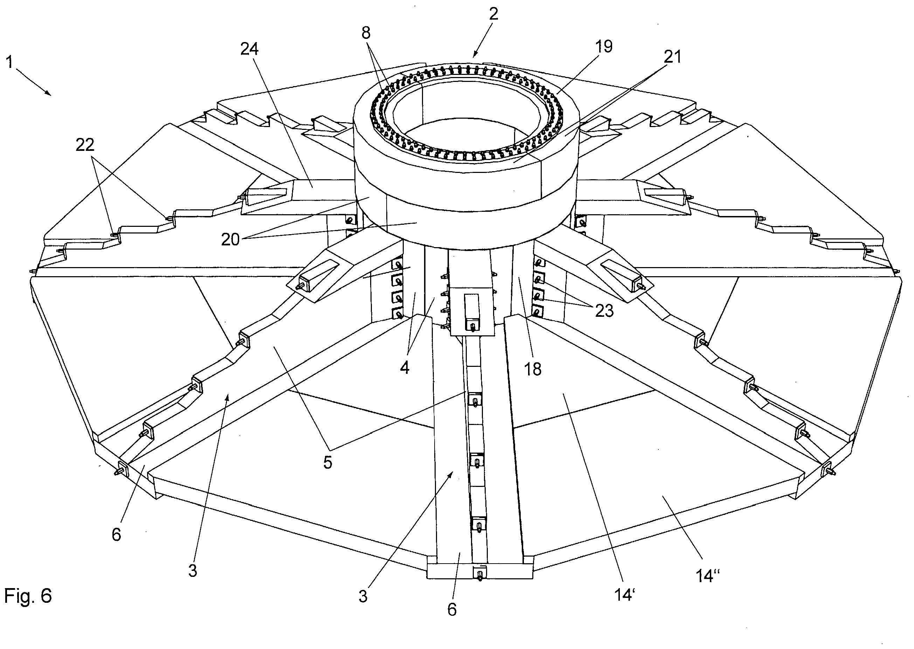

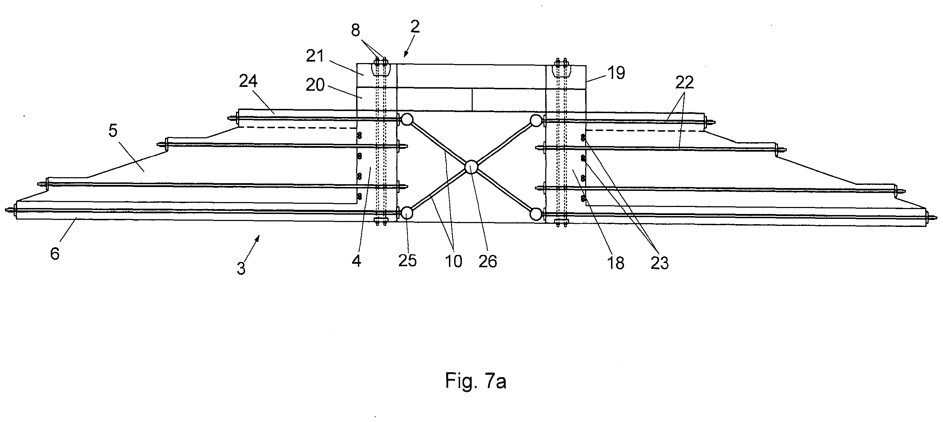

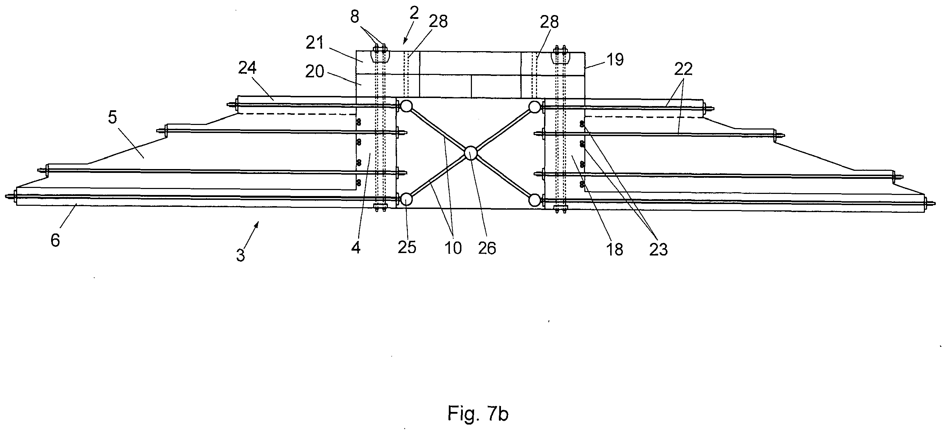

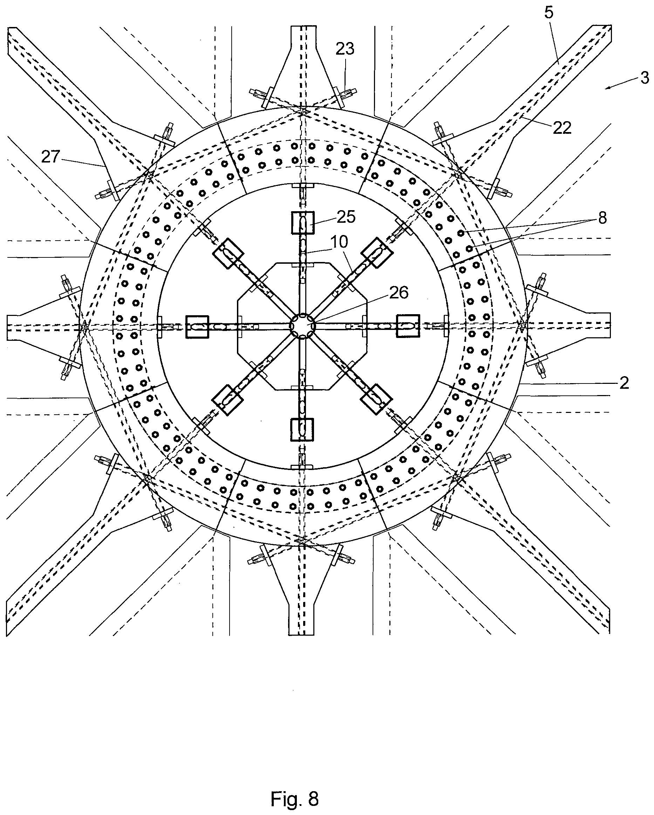

Nachfolgend wird die Erfindung detailliert mit Bezug auf eine in der Zeichnung dargestellte als Beispiel dienende Ausführungsform beschrieben. Fig. 1 zeigt eine erste Ausbildung eines Windmühlenfundaments, das aus vorgefertigten Betonelementen besteht, Fig. 2 zeigt ein vorgefertigtes Betonelement, das im Fundament aus Fig. 1 verwendet wird, Fig. 3 zeigt einen Querschnitt des Fundaments gemäß Fig. 1, Fig. 4 zeigt eine Draufsicht des Fundaments aus Figur 3, Fig. 5 ist eine Teildraufsicht einer modifizierten Ausführungsform des Fundaments gemäß Fig. 1, Fig. 6 zeigt eine zweite Ausbildung eines Windmühlenfundaments, Fig. 7a zeigt einen Querschnitt durch das Fundament gemäß Fig. 6, Fig. 7b zeigt eine gegenüber Fig. 7a abgewandelte Ausführung und Fig. 8 zeigt eine Teilansicht des Fundaments gemäß Fig. 6 in einer Draufsicht.

In Fig. 1 ist ein Fundament 1 dargestellt, das eine Mehrzahl vorgefertigter Betonelemente 3 aufweist. Das Fundament 1 weist einen kreisförmigen Standfuß 2 in Form eines Hohlzylinders zum Tragen eines Windmühlenturms auf. Das Fundament 1 weist ferner mehrere Rippen 5 auf, die vom Standfuß 2 radial nach außen vorstehen. Der Standfuß 2 ist in mehrere Umfangsabschnitte 4 unterteilt (Fig. 2), wobei ein Umfangsabschnitt 4 und eine Rippe 5 jeweils integral miteinander als ein vorgefertigtes Betonelement 3 ausgebildet sind, wie in Fig. 2 dargestellt ist. Das vorgefertigte Betonelement 3 weist eine Basisplatte 6 auf, die ebenfalls integral mit der Rippe 5 ausgebildet ist. Die vorgefertigten Betonelemente 3 bestehen aus verstärktem Beton mit Verstärkungsstangen, die in die vorgefertigten Betonelemente 3 eingebettet sind.

Wenngleich die Rippen in Figur 2 als ein vorgefertigtes Betonelement dargestellt sind, das aus einem einzigen Stück besteht, können die Rippen auch aus zwei oder mehr Rippenabschnitten zusammengesetzt werden. Dies ist besonders vorteilhaft, wenn eine Rippe zu verwirklichen ist, deren radiale Länge die zulässige Länge gewöhnlicher Transporteinrichtungen übersteigt. Insbesondere können zwei oder mehr Rippenabschnitte als getrennte vorgefertigte Betonelemente hergestellt werden, die getrennt zur Arbeitsstelle transportiert werden und an der Arbeitsstelle starr aneinander montiert werden.

Zum genauen Ausrichten der benachbarten Umfangsabschnitte 4 miteinander können die Seitenflächen Formpasselemente 16 in der Art einer trapezförmigen Zungen- und Rillenanordnung aufweisen, die miteinander zusammenwirken, um die relative Position der Elemente 3 zu gewährleisten. Ferner können die vorgefertigten Betonelemente 3 durch wenigstens ein Nachspannkabel aneinander festgezogen werden, wobei das wenigstens eine Nachspannkabel in einem umfänglichen, insbesondere im Querschnitt kreisförmigen Durchgang, der im Standfuß 2 ausgebildet ist, angeordnet werden kann, wobei die Öffnung des Durchgangs mit 17 bezeichnet ist. Natürlich können auch mehrere Durchgänge bereitgestellt werden.

Wie in Fig. 1 ersichtlich umfasst der Standfuß einen Basisringabschnitt 18 und einen Adapterringabschnitt 19. Der Basisringabschnitt wird von den Umfangsabschnitten 4 gebildet. Der Adapterringabschnitt 19 ist auf dem Basisringabschnitt 18 angeordnet und besteht aus zwei Teilsegmenten, die sich jeweils um einen Winkel von 180° erstrecken und von vorgefertigten Betonelementen gebildet sind. Der Adapterringabschnitt stellt auf seiner Oberseite eine horizontale Fläche zur Verfügung, auf welcher der Windmühlenturm (nicht dargestellt) aufgestellt wird. Zur Befestigung des Windmühlenturms sind Ankerbolzen 8 vorgesehen (siehe Fig. 3 und 4).

Die in die vorgefertigten Betonelemente 3 eingebetteten Verstärkungsstangen sind in Fig. 3 dargestellt und mit der Bezugszahl 7 bezeichnet. Ferner sind Ankerbolzen 8 dargestellt, welche die Umfangsabschnitte 4 des Basisringabschnitts 18 und den Adapterringabschnitt 19 des Standfußes 2 durchsetzen und dazu dienen, den Turm der Windmühle an ihren freien Enden, die vom Adapterringabschnitt 19 vorstehen, zu befestigen.

Eine Ummantelung 9 ist an der inneren zylindrischen Fläche des Standfußes 2 angeordnet. Die Verstärkungsstangen 7 sind dafür eingerichtet, von den vorgefertigten Betonelementen 3 nach innen vorzustehen und in Öffnungen einzudringen, die in der Ummantelung 9 bereitgestellt sind, so dass die Stangen 7 an der Innenseite mit der Ummantelung 9 durch Schweißen verbunden werden können (die Schweißverbindung ist bei 15 nur als Beispiel an einer der Stangen 7 dargestellt). Ferner sind Stahlprofile 10 jeweils beispielsweise durch eine Schraubverbindung mit der Ummantelung 9 verbunden. Die Stahlprofile 10 verbinden entgegengesetzt angeordnete vorgefertigte Betonelemente 3 derart miteinander, dass sie durch einen Hohlraum 12 hindurchtreten, der vom Standfuß 2 eingekreist ist. Zumindest ein Teil der Stahlprofile 10 erstreckt sich schräg, um eine "X"-Konfiguration zu bilden, worin die Profile 10 jeweils in einem oberen Bereich an einem der entgegengesetzt angeordneten vorgefertigten Betonelemente 3 und in einem unteren Bereich an den anderen der entgegengesetzt angeordneten vorgefertigten Betonelemente 3 befestigt sind.

Wie in Fig. 3 ersichtlich ist, weist die Basisplatte 6 jedes vorgefertigten Betonelements 3 einen Randabschnitt auf, der nach innen in den Hohlraum 12 vorsteht, wobei die Randabschnitte aller vorgefertigten Betonelemente 3 gemeinsam einen kreisförmigen Rand 13 bilden, der eine mittlere untere Platte 11, die am Boden des Standfußes 2 angeordnet ist, umfänglich hält.

Fig. 4 zeigt in einer Draufsicht des Fundaments aus Fig. 3, dass jedes Paar entgegengesetzt angeordneter vorgefertigter Betonelemente 3 durch Stahlprofile 10 miteinander verbunden ist.

Fig. 5 zeigt eine Ausführungsform, bei der der Zwischenraum zwischen zwei benachbarten vorgefertigten Betonelementen 3 durch eine jeweilige Überbrückungsplatte 14 überbrückt ist, die eine solche radiale Abmessung aufweist, dass sie von den vorgefertigten Betonelementen 3 radial vorsteht. Die Überbrückungsplatte 14 kann durch Bolzen an der Basisplatte 6 der vorgefertigten Betonelemente 3 befestigt werden.

Eine abgewandelte Ausbildung des Fundaments 1 ist in den Fig. 6, 7 und 8 dargestellt. Das Fundament 1 umfasst wieder eine Mehrzahl vorgefertigter Betonelemente 3, welche jeweils einen Umfangsabschnitt 4 des Basisringabschnitts 18 des Standfußes 2, die Basisplatte 6 und die Rippe 5 ausbilden. Die vorgefertigten Betonelemente 3 bestehen aus verstärktem Beton mit Verstärkungsstangen (nicht dargestellt), die in die vorgefertigten Betonelemente 3 eingebettet sind. Der Zwischenraum zwischen den vorgefertigten Betonelementen 3 wird jeweils von Überbrückungsplatten 14 überbrückt, die abweichend von der Ausbildung gemäß den Fig. 1 bis 5 zweigeteilt sind. Eine innere Überbrückungsplatte ist mit 14' und eine äußere Überbrückungsplatte ist mit 14" bezeichnet.

Der Standfuß 2 ist in Höhenrichtung in einen Basisringabschnitt 18 und in einen Adapterringabschnitt 19 unterteilt. Der Basisringabschnitt 18 wird von den Umfangsabschnitten 4 der vorgefertigten Betonelemente 3 gebildet. Der Adapterringabschnitt 19 umfasst zwei übereinander angeordnete Ringe aus vorgefertigten Betonelementen, wobei der untere Ring von zwei Segmenten 20 und der obere Ring von zwei Segmenten 21 gebildet ist. Die Segmente 20 und 21 erstrecken sich jeweils über einen Winkel von 180° und sind von vorgefertigten Betonelementen gebildet. Die Teilung der Ringe ist um 90° versetzt angeordnet.

In der Schnittdarstellung gemäß Fig. 7a ist die Verstärkungsstruktur des Fundaments 1 ersichtlich. Die Verstärkungsstruktur umfasst neben den nicht dargestellten, in die vorgefertigten Betonelemente 3 eingebetteten Verstärkungsstangen aus Stahl die Spannelemente 22. Die Spannelemente 22 durchsetzen jeweils einen in den Betonelementen 3 ausgebildeten Durchgang und sind als Spannstangen oder Spanndrähte bzw. -seile aus Stahl ausgebildet, deren aus dem Betonelement herausragende Enden Anschlagelemente aufweisen, die gegen das Betonelement 3 gespannt sind, sodass die Spannelemente auf Zug belastet sind. An die Spannelemente 22 ist eine zweite Verstärkungsstruktur gekoppelt, die wie bei der Ausbildung gemäß den Fig. 1 bis 5 von Stahlstangen oder Stahlprofilen 10 gebildet sind und die Spannelemente 22 von entgegengesetzt angeordneten Betonelementen 3 X-förmig miteinander verbinden. Die Ankoppelung der Stahlprofile 10 an die Spannelemente 22 erfolgt dabei über schematisch dargestellte Koppelelemente 25, an welche die Spannelemente 22 bzw. die Stahlprofile 10 angeschraubt oder verschweißt sind. Die x-förmige Konfiguration der Stahlprofile 10 wird hierbei dadurch erreicht, dass die Stahlprofile 10 an einem zentralen Element 26 befestigt sind, von dem sich die Stahlprofile 10 sternförmig erstrecken.

Weiters ist in Fig. 6 und Fig. 7a ersichtlich, dass die vorgefertigten Betonelemente 3 im Querschnitt I-förmig ausgebildet sind, wobei die Bodenplatte 6 und eine Deckplatte 24 durch den Steg der Rippe 5 miteinander einstückig verbunden sind.

Bei der abgewandelten Ausführung gemäß Fig. 7b dienen die Ankerbolzen 8 lediglich dem Zusammenspannen des Adapterringabschnitts 19 mit dem Basisringabschnitt 18. Der Adapterringabschnitt 19 ist nun für die Befestigung eines Betonturms angepasst und weist daher eine Mehrzahl von Seildurchführungen 28 auf, die bevorzugt entlang eines Kreises angeordnet sind. Die Verspannung der vom Turm kommenden, durch die Seildurchführungen 28 geführten Seile (nicht dargestellt) erfolgt im darunter liegenden Hohlraum (Seilkeller).

In der Darstellung gemäß Fig. 8 ist ersichtlich, dass benachbarte vorgefertigte Betonelemente 3 im Bereich der Umfangsabschnitte 4 des Standfußes 2 mit Hilfe von tangential verlaufenden Spannelementen 23 gegeneinander verspannt sind. Die Spannelemente 23 durchsetzen dabei Durchgänge, die in den vorgefertigten Betonelementen 3 ausgebildet sind und bestehen vorzugsweise aus Stahl. Die Spannelemente 23 können von Spannstangen oder -seilen gebildet sein. Um geeignete Anschlagflächen bereitzustellen, weisen die vorgefertigten Betonelemente am Übergang von den Umfangsabschnitten 4 zu den Rippen 5 jeweils schräg verlaufende Übergangsabschnitte 27 auf, deren Anschlagflächen senkrecht zu den tangentialen Spannelementen 23 verlaufen. An jedem vorgefertigten Betonelement 3 greift dabei ein erstes Spannelement 23 an, welches das betreffende Betonelement 3 mit dem nächstliegenden rechten Betonelemente 3 verspannt, und ein zweites Spannelement 23, welches das betreffende Betonelement 3 mit dem nächstliegenden linken Betonelemente 3 verspannt.

## Patentansprüche

1. Fundament (1) für eine Windmühle mit einem kreisförmigen oder polygonalen Standfuß (2) zum Tragen eines Windmühlenturms und mehreren Rippen (5), die vom Standfuß (2) radial nach außen vorstehen, wobei der Standfuß (2) in Höhenrichtung in einen Basisringabschnitt (18) und in einen Adapterringabschnitt (19) unterteilt ist, wobei der Basisringabschnitt (18) in mehrere Umfangsabschnitte (4) unterteilt und aus vorgefertigten Betonelementen (3) zusammengesetzt ist und wobei der Adapterringabschnitt (19) ebenfalls aus vorgefertigten Betonelementen zusammengesetzt ist, **dadurch gekennzeichnet, dass** ein Umfangsabschnitt (4) des Basisringabschnitts (18) und eine vom Umfangsabschnitt (4) nach außen vorstehende Rippe (5) jeweils als ein vorgefertigtes Betonelement (3) integral miteinander ausgebildet sind.

2. Fundament nach Anspruch 1, **dadurch gekennzeichnet, dass** der Adapterringabschnitt (19) in wenigstens zwei Umfangsabschnitte unterteilt ist und jeder Umfangsabschnitt von einem vorgefertigten Betonelement gebildet ist.

3. Fundament nach Anspruch 2, **dadurch gekennzeichnet, dass** der Adapterringabschnitt (19) und der Basisringabschnitt (18) eine voneinander verschiedene Umfangsteilung aufweisen.

4. Fundament nach einem der Ansprüche 1 bis 5, **dadurch gekennzeichnet, dass** der Adapterringabschnitt (19) wenigstens zwei übereinander angeordnete Ringe aus vorgefertigten Betonelementen (20,21) aufweist.

5. Fundament nach Anspruch 4, **dadurch gekennzeichnet, dass** die Ringe jeweils in wenigstens zwei Umfangsabschnitte unterteilt sind und jeder Umfangsabschnitt von einem vorgefertigten Betonelement (20,21) gebildet ist, wobei die Umfangsteilung vorzugsweise zueinander versetzt, insbesondere um 90° versetzt, angeordnet ist.

6. Fundament nach einem der Ansprüche 1 bis 5, **dadurch gekennzeichnet, dass** die Unterteilung des Standfußes (2) in einen Basisring- (18) und einen Adapterringabschnitt (19) entlang wenigstens einer eine horizontale Ebene umfassenden Teilungsfläche verläuft.

7. Fundament nach Anspruch 6, **dadurch gekennzeichnet, dass** die Teilungsfläche wenigsten eine Stufe ausbildet.

8. Fundament nach einem der Ansprüche 1 bis 7, **dadurch gekennzeichnet, dass** Verbindungselemente, wie z.B. Schraubverbindungen, zur vorzugsweise lösbaren Verbindung des Adapterringabschnitts (19) mit dem Basisringabschnitt (18) vorgesehen sind.

9. Fundament nach einem der Ansprüche 1 bis 8, **dadurch gekennzeichnet, dass** der Adapterringabschnitt (19) eine horizontale Standfläche für den Windmühlenturm sowie Verankerungsmittel zum Verankern des Windmühlenturms am Standfuß (2) umfasst, wobei die Verankerungsmittel vorzugsweise Ankerbolzen (8) und/oder Seildurchführungen (28) umfassen.

10. Fundament nach Anspruch 9, **dadurch gekennzeichnet, dass** die Verbindungselemente für die Verbindung des Adapterringabschnitts (19) mit dem Basisringabschnitt (18) radial außerhalb der Verankerungsmittel für die Verankerung des Windmühlenturms am Standfuß (2) angeordnet sind.

11. Fundament nach Anspruch 9, **dadurch gekennzeichnet, dass** die Verbindungselemente für die Verbindung des Adapterringabschnitts (19) mit dem Basisringabschnitt (18) von den Verankerungsmitteln für die Verankerung des Windmühlenturms am Standfuß (2) gebildet sind.

12. Fundament nach einem der Ansprüche 1 bis 11, **dadurch gekennzeichnet, dass** die vorgefertigten Betonelemente (3) des Basisringabschnitts (18) und die vorgefertigten Betonelemente des Adapterringabschnitts (19) aus verstärktem Beton bestehen, der eine erste Verstärkungsstruktur (7,22), insbesondere Verstärkungselemente, -profile, -stangen oder -drähte, aufweist, welche in die vorgefertigten Betonelemente (3) eingebettet sind und/oder die als Spannelemente zum Zusammenspannen der vorgefertigten Betonelemente (3) ausgebildet sind, und dass eine zweite Verstärkungsstruktur (10) bereitgestellt ist, welche die vorgefertigten Betonelemente (3) zusammenhält und mit der ersten Verstärkungsstruktur (7,22) gekoppelt ist.

13. Fundament nach Anspruch 12, **dadurch gekennzeichnet, dass** die zweite Verstärkungsstruktur (10) mehrere starre längliche Verstärkungselemente, insbesondere Stahlprofile oder -stangen, aufweist, die jeweils die vorgefertigten Betonelemente (3) eines Paars entgegengesetzt angeordneter vorgefertigter Betonelemente (3) derart miteinander verbinden, dass ein Hohlraum (12) durchquert wird, welcher von dem Standfuß (2) eingekreist ist.

14. Fundament nach Anspruch 13, **dadurch gekennzeichnet, dass** jedes Paar entgegengesetzt angeordneter vorgefertigter Betonelemente (3) mit einem der starren länglichen Verstärkungselemente verbunden ist.

15. Fundament nach Anspruch 13 oder 14, **dadurch gekennzeichnet, dass** ein Paar von entgegengesetzt angeordneten vorgefertigten Betonelementen (3) jeweils ein vorgefertigtes Betonelement (3) des Basisringabschnitts (18) und ein vorgefertigtes Betonelement des Adapterringabschnitts (19) umfasst.

16. Fundament nach Anspruch 13, 14 oder 15, **dadurch gekennzeichnet, dass** die starren länglichen Verstärkungselemente der zweiten Verstärkungsstruktur (10), und die erste Verstärkungsstruktur (7,22), insbesondere die Verstärkungsstangen, durch eine Ummantelung (9), die an einer Innenfläche des Standfußes (2) angeordnet ist, miteinander verbunden sind.

17. Fundament nach Anspruch 16, **dadurch gekennzeichnet, dass** die Verstärkungselemente der ersten Verstärkungsstruktur (7,22) durch Schweißen/Schraubverbindungen (15) an der Ummantelung befestigt sind.

18. Fundament nach einem der Ansprüche 1 bis 17, **dadurch gekennzeichnet, dass** die vorgefertigten Betonelemente (3) eine integral mit diesem ausgebildete Basisplatte (6) zum Tragen der Rippe (5) aufweisen, wobei die Basisplatte (6) vorzugsweise einen Randabschnitt aufweist, der nach innen in den vom Standfuß (2) eingekreisten Hohlraum (12) vorsteht.

19. Fundament nach einem der Ansprüche 1 bis 18, **dadurch gekennzeichnet, dass** die Höhe der Rippe (5) zum Standfuß (2) hin kontinuierlich zunimmt.

20. Verfahren zur Herstellung eines Windmühlenfundaments (1) gemäß einem der Ansprüche 1 bis 19 unter Verwendung eines modularen Systems umfassend einen kreisförmigen oder polygonalen Standfuß (2) zum Tragen eines Windmühlenturms und mehrere Rippen (5), die vom Standfuß (2) radial nach außen vorstehen, wobei der Standfuß (2) einen Basisringabschnitt (18) umfasst, der in mehrere Umfangsabschnitte (4) unterteilt und aus vorgefertigten Betonelementen (3) zusammengesetzt wird, und wobei das System wenigstens zwei unterschiedliche Ausführungen eines Adapterringabschnitts (19) umfasst, von denen einer ausgewählt und auf den Basisringabschnitt (18) aufgesetzt und aus vorgefertigten Betonelementen zusammengesetzt wird, **dadurch gekennzeichnet, dass** die wenigstens zwei Ausführungen des Adapterringabschnitts (19) sich voneinander in den Mitteln zur Verankerung des Windmühlenturms, insbesondere in der Art, der Anzahl oder der Geometrie der Verankerungsmittel unterscheiden und eine erste Ausführung des Adapterringabschnitts (19) Verankerungsbolzen (8) zur Verankerung des Windmühlenturms und eine zweite Ausführung des Adapterringabschnitts (19) Seildurchführungen (28) für Spannseile zum Verspannen des Windmühlenturms umfasst.

## Claims

1. Foundation (1) for a windmill, having a circular or polygonal pedestal (2) for supporting a windmill tower and a plurality of ribs (5) which project radially outwards from the pedestal (2), wherein in vertical direction, the pedestal (2) is divided into a base ring section (18) and an adapter ring section (19), wherein the base ring section (18) is divided into a plurality of peripheral sections (4) and is composed of precast concrete elements (3) and wherein the adapter ring section (19) is likewise composed of precast concrete elements, **characterised in that** a peripheral section (4) of the base ring section (18) and a rib (5) projecting outwards from the peripheral section (4) are respectively integrally formed with one another as a precast concrete element (3).

2. Foundation according to claim 1, **characterised in that** the adapter ring section (19) is divided into at least two peripheral sections and each peripheral section is formed by a precast concrete element.

3. Foundation according to claim 2, **characterised in that** the adapter ring section (19) and the base ring section (18) have a different circumferential pitch.

4. Foundation according to any one of claims 1 to 3, **characterised in that** the adapter ring section (19) comprises at least two rings of precast concrete elements (20,21) which are arranged one above the other.

5. Foundation according to claim 4, **characterised in that** the rings are respectively divided into at least two peripheral sections and each peripheral section is formed by a precast concrete element (20,21), wherein the circumferential pitch is preferably offset relative to one another, in particular offset by 90°.

6. Foundation according to any one of claims 1 to 5, **characterised in that** the division of the pedestal (2) into a base ring section (18) and an adapter ring section (19) extends along at least one dividing surface which comprises a horizontal plane.

7. Foundation according to claim 6, **characterised in that** the dividing surface forms at least one step.

8. Foundation according to any one of claims 1 to 7, **characterised in that** connecting elements, e.g. screw connections, are provided for the preferably releasable connection of the adapter ring section (19) to the base ring section (18).

9. Foundation according to any one of claims 1 to 8, **characterised in that** the adapter ring section (19) comprises a horizontal standing surface for the windmill tower and anchoring means for anchoring the windmill tower to the pedestal (2), wherein the anchoring means preferably comprise anchor bolts (8) and/or rope lead throughs (28).

10. Foundation according to claim 9, **characterised in that** the connecting elements for connecting the adapter ring section (19) to the base ring section (18) are arranged radially outside the anchoring means for anchoring the windmill tower to the pedestal (2).

11. Foundation according to claim 9, **characterised in that** the connecting elements for connecting the adapter ring section (19) to the base ring section (18) are formed by the anchoring means for the anchoring of the windmill tower to the pedestal (2) .

12. Foundation according to any one of claims 1 to 11, **characterised in that** the precast concrete elements (3) of the base ring section (18) and the precast concrete elements of the adapter ring section (19) consist of reinforced concrete comprising a first reinforcing structure (7,22), in particular reinforcing elements, sections, bars or wires, which are embedded in the precast concrete elements (3) and/or which are designed as stressing elements for stressing the precast concrete elements (3) together, and **in that** a second reinforcing structure (10) is provided, which holds the precast concrete elements (3) together and is coupled to the first reinforcing structure (7,22).

13. Foundation according to claim 12, **characterised in that** the second reinforcing structure (10) comprises a plurality of rigid elongated reinforcing elements, in particular steel sections or bars, which respectively connect the precast concrete elements (3) of a pair of oppositely arranged precast concrete elements (3) such that a hollow space (12) surrounded by the pedestal (2) is traversed.

14. Foundation according to claim 13, **characterised in that** each pair of oppositely arranged precast concrete elements (3) is connected to one of the rigid elongated reinforcing elements.

15. Foundation according to claim 13 or 14, **characterised in that** a pair of oppositely arranged precast concrete elements (3) respectively comprises a precast concrete element (3) of the base ring section (18) and a precast concrete element of the adapter ring section (19).

16. Foundation according to claim 13, 14 or 15, **characterised in that** the rigid elongated reinforcing elements of the second reinforcing structure (10) and the first reinforcing structure (7,22), in particular the reinforcing bars, are connected to one another by a casing (9) arranged on an inner surface of the pedestal (2).

17. Foundation according to claim 16, **characterised in that** the reinforcing elements of the first reinforcing structure (7,22) are fastened to the casing by welding/screw connections (15) .

18. Foundation according to any one of claims 1 to 17, **characterised in that** the precast concrete elements (3) comprise a base plate (6) which is integrally formed with said precast concrete elements (3) for supporting the rib (5), wherein the base plate (6) preferably comprises an edge section which projects inwards into the hollow space (12) surrounded by the pedestal (2).

19. Foundation according to any one of claims 1 to 18, **characterised in that** the height of the rib (5) increases continuously towards the pedestal (2).

20. Method of producing a windmill foundation (1) according to any one of claims 1 to 19 by using a modular system, comprising a circular or polygonal pedestal (2) for supporting a windmill tower and a plurality of ribs (5) which project radially outwards from the pedestal (2), wherein the pedestal (2) comprises a base ring section (18) which is divided into a plurality of peripheral sections (4) and is composed of precast concrete elements (3) and wherein the system comprises at least two different embodiments of an adapter ring section (19), one of which is selected and placed onto the base ring section (18) and is composed of precast concrete elements, **characterised in that** the at least two embodiments of the adapter ring section (19) differ from one another in the means for anchoring the windmill tower, in particular in the manner, the number or the geometry of the anchoring means and a first embodiment of the adapter ring section (19) comprises anchor bolts (8) for anchoring the windmill tower and a second embodiment of the adapter ring section (19) comprises rope lead throughs (28) for stressing cables for guying the wind turbine tower.

## Revendications

1. Embase (1) pour une éolienne comprenant un pied circulaire ou polygonal (2) pour porter un mât d'éolienne et plusieurs nervures (5) faisant saillie du pied (2) radialement vers l'extérieur, dans laquelle le pied (2) est subdivisé dans le sens de la hauteur en une section annulaire de base (18) et une section annulaire formant adaptateur (19), dans laquelle la section annulaire de base (18) est subdivisée en plusieurs sections périphériques (4) et composée d'éléments en béton préfabriqués (3) et dans laquelle la section annulaire formant adaptateur (19) est également composée d'éléments en béton préfabriqués, **caractérisée en ce qu'**une section périphérique (4) de la section annulaire de base (18) et une nervure (5) faisant saillie de la section périphérique (4) vers l'extérieur sont respectivement formées d'un seul tenant l'une avec l'autre sous la forme d'un élément en béton préfabriqué (3).

2. Embase selon la revendication 1, **caractérisée en ce que** la section annulaire formant adaptateur (19) est subdivisée en au moins deux sections périphériques et chaque section périphérique est formée par un élément en béton préfabriqué.

3. Embase selon la revendication 2, **caractérisée en ce que** la section annulaire formant adaptateur (19) et la section annulaire de base (18) présentent une division périphérique mutuellement différente.

4. Embase selon l'une quelconque des revendications 1 à 5, **caractérisée en ce que** la section annulaire formant adaptateur (19) présente au moins deux anneaux d'éléments en béton préfabriqués (20, 21) agencés l'un au-dessus de l'autre.

5. Embase selon la revendication 4, **caractérisée en ce que** les anneaux sont respectivement subdivisés en au moins deux sections périphériques et chaque section périphérique est formée par un élément en béton préfabriqué (20, 21), dans laquelle la division périphérique est de préférence agencée avec un décalage mutuel, en particulier un décalage de 90°.

6. Embase selon l'une quelconque des revendications 1 à 5, **caractérisée en ce que** la subdivision du pied (2) en une section annulaire de base (18) et une section annulaire formant adaptateur (19) s'étend le long d'au moins une surface de division comprenant un plan horizontal.

7. Embase selon la revendication 6, **caractérisée en ce que** la surface de division forme au moins un étage.

8. Embase selon l'une quelconque des revendications 1 à 7, **caractérisée en ce que** des éléments de liaison, tels que des liaisons par vis, sont prévus pour relier de préférence de manière amovible la section annulaire formant adaptateur (19) à la section annulaire de base (18).

9. Embase selon l'une quelconque des revendications 1 à 8, **caractérisée en ce que** la section annulaire formant adaptateur (19) comprend une surface de pose horizontale pour le mât d'éolienne et des moyens d'ancrage pour ancrer le mât d'éolienne au pied (2), dans laquelle les moyens d'ancrage comprennent de préférence des boulons d'ancrage (8) et/ou des passages de câble (28).

10. Embase selon la revendication 9, **caractérisée en ce que** les éléments de liaison pour relier la section annulaire formant adaptateur (19) à la section annulaire de base (18) sont agencés radialement à l'extérieur des moyens d'ancrage pour ancrer le mât d'éolienne sur le pied (2).

11. Embase selon la revendication 9, **caractérisée en ce que** les éléments de liaison pour relier la section annulaire formant adaptateur (19) à la section annulaire de base (18) sont formés par les moyens d'ancrage pour ancrer le mât d'éolienne sur le pied (2).

12. Embase selon l'une quelconque des revendications 1 à 11, **caractérisée en ce que** les éléments en béton préfabriqués (3) de la section annulaire de base (18) et les éléments en béton préfabriqués de la section annulaire formant adaptateur (19) sont constitués de béton armé, qui présente une première structure de renfort (7, 22), en particulier des éléments, profilés, barres ou fils de renfort, qui sont encastrés dans les éléments en béton préfabriqués (3) et/ou qui sont conçus sous la forme d'éléments de serrage pour serrer les éléments en béton préfabriqués (3) ensemble, et **en ce qu'**une seconde structure de renfort (10) est fournie, qui maintient les éléments en béton préfabriqués (3) ensemble et est couplée à la première structure de renfort (7, 22).

13. Embase selon la revendication 12, **caractérisée en ce que** la seconde structure de renfort (10) présente plusieurs éléments de renfort allongés rigides, en particulier des profilés ou barres en acier, qui relient respectivement les éléments en béton préfabriqués (3) d'une paire d'éléments en béton préfabriqués (3) agencés mutuellement opposés de telle manière qu'une cavité (12) est traversée, laquelle est entourée par le pied (2).

14. Embase selon la revendication 13, **caractérisée en ce que** chaque paire d'éléments en béton préfabriqués agencés mutuellement opposés (3) est reliée à l'un des éléments de renfort allongés rigides.

15. Embase selon la revendication 13 ou 14, **caractérisée en ce qu'**une paire d'éléments en béton préfabriqués agencés mutuellement opposés (3) comprend respectivement un élément en béton préfabriqué (3) de la section annulaire de base (18) et un élément en béton préfabriqué de la section annulaire formant adaptateur (19).

16. Embase selon la revendication 13, 14 ou 15, **caractérisée en ce que** les éléments de renfort allongés rigides de la seconde structure de renfort (10) et de la première structure de renfort (7,22), en particulier les tiges de renfort, sont reliés les uns aux autres par une gaine (9) qui est agencée au niveau d'une surface intérieure du pied (2).

17. Embase selon la revendication 16, **caractérisée en ce que** les éléments de renfort de la première structure de renfort (7, 22) sont fixés à la gaine par des soudures/liaisons vissées (15).

18. Embase selon l'une quelconque des revendications 1 à 17, **caractérisée en ce que** les éléments en béton préfabriqués (3) présentent une plaque de base (6) conçue d'un seul tenant avec ceux-ci pour supporter la nervure (5), dans laquelle la plaque de base (6) présente de préférence une section de bord, qui fait saillie vers l'intérieur dans la cavité (12) entourée par le pied (2).

19. Embase selon l'une quelconque des revendications 1 à 18, **caractérisée en ce que** la hauteur de la nervure (5) augmente de manière continue vers le pied (2).

20. Procédé de fabrication d'une embase d'éolienne (1) selon l'une quelconque des revendications 1 à 19 utilisant un système modulaire comprenant un pied circulaire ou polygonal (2) pour porter un mât d'éolienne et plusieurs nervures (5) faisant saillie à partir de la base (2) radialement vers l'extérieur, dans lequel le pied (2) comprend une section annulaire de base (18) qui est subdivisée en plusieurs sections périphériques (4) et composée d'éléments en béton préfabriqués (3), et dans lequel le système comprend au moins deux versions différentes d'une section annulaire formant adaptateur (19), dont l'une est sélectionnée et placée sur la section annulaire de base (18) et composée d'éléments en béton préfabriqués, **caractérisé en ce que** les au moins deux versions de la section annulaire formant adaptateur (19) diffèrent l'une de l'autre dans les moyens d'ancrage du mât d'éolienne, en particulier dans le type, le nombre ou la géométrie des moyens d'ancrage et une première version de la section annulaire formant adaptateur (19) comprend des boulons d'ancrage (8) pour ancrer le mât d'éolienne et une seconde version de la section annulaire formant adaptateur (19) comprend des passages de câble (28) pour serrer des câbles afin de serrer le mât d'éolienne.
